# EUROPEAN PATENT APPLICATION

(11) **EP 2 091 035 A1**
(43) Date of publication of application: **19.08.2009**
(21) Application number: 08166216.5
(22) Date of filing: 09.10.2008
(51) Int. Cl.: G09B 29/00

(54) **Method and apparatus for spatial display and selection**

(30) Priority: 26.12.2007 US 964504
(71) Applicant: Robert Bosch GmbH, 70469 Stuttgart (DE)
(72) Inventor: Faenger, Jens, Sunnyvale 94085 (CA); Krum, David Michael, Marina del Rey, CA 90292 (US)
(74) Representative: Barth, Stephan Manuel

(57) **Abstract**

A method of displaying map information includes providing an electronic two-dimensional map of points of interest. A section of the map is displayed on a screen such that at least one of the points of interest has a map location lying outside of the displayed section. An indication is provided on the displayed section. The indication is indicative of the map location of the at least one point of interest. The indication is disposed at a place within the displayed section that is closest to the map location of the at least one point of interest.

## Description

### COPYRIGHT NOTICE

Portions of this document are subject to copyright protection. The copyright owner does not object to facsimile reproduction of the patent document as it is made available by the U.S. Patent and Trademark Office. However, the copyright owner reserves all copyrights in the software described herein and shown in the drawings. The following notice applies to the software described and illustrated herein: Copyright © 2007, Robert Bosch GmbH, All Rights Reserved.

### BACKGROUND OF THE INVENTION

### 1. Field of the Invention.

The present invention relates to methods for presenting map information, such as locations of points of interest, on a two-dimensional display.

### 2. Description of the Related Art.

The state of the art for displaying spatial data sets includes map applications such as the ones in TomTom Navigator, Yahoo maps, Yahoo Go, and Google maps, for example. These map applications may enable the user to explore a spatial data set by using zoom and scroll functions to adjust which part of the data space is visible on a screen. For example, to get an overview of all the available data items and their locations, the user can zoom out until the entire data space is visible on the screen. To see the location and surroundings of an item in more detail, the user can zoom in and pan to make visible a portion of the data space. A drawback of changing the zoom and adjusting the visible portion of the data space is that data items with a location outside the visible part of the data space will disappear from the screen. If the user wants to see those items, he needs to use conventional scroll and zoom functionalities, which can be a cumbersome process.

An "overview plus detail" approach is a common technique to provide the user with a detailed view while also providing an impression about the overall data space, through the use of a separate overview map. These overview maps are displayed in addition to the regular screen representation of the data space and provide a synchronized view of the data, albeit at a different zoom level, which makes it possible to see a larger area, or even the complete extent of the data space.

Another approach to providing a detailed view, as well as an impression of the surrounding data space, is a "focus plus context" technique. Such a technique provides a single view of the data space, with a detailed rendering of the focus area, but fewer details for the regions outside the focus area, thus highlighting the essential details of the surrounding context. An example of such a technique is a fisheye zoom lens. The fisheye zoom lens displays the data space in a single view, with different zoom levels in different parts of the view. Usually, high zoom levels are used in the middle of the screen to show more details, while the outer part of the screen uses lower zoom levels to provide an overview. A drawback of the fisheye zoom lens is the use of different zoom levels, which distorts the geometry of the data space, thereby reducing the user's ability to learn and understand the structure of the data.

Various approaches have also been employed to display information about off-screen items. It is known for the location of off-screen items to be conveyed to the user by surrounding each item with large circles that reach into the visible screen space. The visible part, or arc, of each circle also encodes the distance of the item to the screen area due to the apparent diameter of each arc. A drawback of this approach is that this additional information about the items is encoded in the radius of curvature of the circles, which requires some additional learning by the user. Another known approach employs onscreen proxies, or graphical representations of off-screen items. These proxies can also convey additional information about the off-screen item to help distinguish it from other items through size, shape, and/or color, etc. Proxies also can be selected, just like normal onscreen items. Upon selection of an item or proxy, the screen space is centered on the location of the item or the item represented by the proxy. The selection technique relies on using a mouse or other two-dimensional input controller which can address any point on screen. Selection of items takes a total of four interaction steps, which may be too many in attention-limited use cases such as driving a car. Another drawback of the last two approaches is that they work for only a limited number of off-screen items. With large numbers of items, visual clutter occurs, making it difficult for the user to select items and to understand the layout of the items, for example.

What is neither disclosed nor suggested by the prior art is a method for presenting map information on a display such that locations of point of interest lying outside of the display are indicated and easily interpreted by a user. What is also neither disclosed nor suggested by the prior art is an easily operated apparatus for accessing map information on a display wherein locations of point of interest lie outside of the display. What is also neither disclosed nor suggested by the prior art is a method for presenting map information on a display such that the ordering and selecting of on-screen points of interest is performed in a manner that is intuitive to the user.

### SUMMARY OF THE INVENTION

The present invention may provide a set of techniques for selecting objects arranged on a display or data space. Objects may lie outside the currently visible area. These techniques allow objects to be selected in turn and made visible to provide information to a user, or in preparation for other actions.

The invention presents a novel user interaction technology. The invention allows for spatial display and selection of location-based data items such as, but not limited to, points of interest on a digital electronic map. The invention may facilitate the display of items and their locations, even when the data space is not displayed in its full extent on a screen, i.e., when all items might not be visible on the screen. For example, this may be done by adjusting the position of off-screen items in order to make the items, or indications of the items, visible to the user on the screen. The invention may make selection of items easier and faster for a user when using input controllers, which can select items in sequence. An input controller may be in the form of a one-dimensional controller, such as a dial or knob, for example.

The present invention may improve the display and selection of location-based data on the screens of devices such as, but not limited to, computers, mobile computing devices, cell phones, and navigation systems. Location-based data can be any information or object that can be given a position in an information space. One example of use of such location-based data is presentation of restaurant locations and/or other points of interest by showing their icons on a digital electronic map. The present invention may enable the making of selections with a controller that has one-dimensional input, i.e., a controller that can be used to move to the previous item, the next item, or to select the current item.

The invention comprises, in one form thereof, a method of displaying map information, including providing an electronic two-dimensional map of points of interest. A section of the map is displayed on a screen such that at least one of the points of interest has a map location lying outside of the displayed section. An indication is provided on the displayed section. The indication is indicative of the map location of the at least one point of interest. The indication is disposed at a place within the displayed section that is closest to the map location of the at least one point of interest.

The invention comprises, in another form thereof, an electronic map arrangement including a screen apparatus for displaying at least a section of an electronic two-dimensional map of points of interest. A user controlled electronic highlighting device selectively highlights on the screen apparatus a single one of the points of interest at a time, and highlights on the screen the points of interest in a particular sequence. A user controlled electronic selecting device selects a currently highlighted point of interest to thereby cause additional information about the selected point of interest to be provided to the user.

The invention comprises, in yet another form thereof, a method of displaying map information, including providing an electronic two-dimensional map of points of interest. A section of the map is displayed on a screen such that at least two of the points of interest have respective map locations lying outside of the displayed section. An indication is provided on the displayed section. A placement of the indication within the displayed section is indicative of the map locations of the at least two points of interest.

An advantage of the present invention is that a user may be provided with an easily interpreted indication of locations of points of interest that lie beyond the boundaries of a displayed section of an electronic map.

Another advantage of the present invention is that the user may highlight a desired point of interest by use of an easily operated one-dimensional control.

Yet another advantage of the present invention is that multiple points of interest may be indicated by a single cluster in order to avoid cluttering the display. Further, multiple clusters may be indicated by another single cluster in order to avoid cluttering the display.

Still another advantage of the present invention is the automatic zooming and scrolling to items. The display may be automatically centered on the points of interest associated with a selected cluster. No manual scrolling and zooming within the data space may be required of the user.

A further advantage is that all location-based data items may be visible and selectable on the screen at all times. Thus, the user does not need to search the off-screen space for items, thereby reducing the number of interaction steps and time.

### BRIEF DESCRIPTION OF THE DRAWINGS

The above mentioned and other features and objects of this invention, and the manner of attaining them, will become more apparent and the invention itself will be better understood by reference to the following description of embodiments of the invention taken in conjunction with the accompanying drawings, wherein:
FIG. 1a is a schematic plan view of one embodiment of an electronic map arrangement of the present invention in a first state.
FIG. 1b is a schematic plan view of the electronic map arrangement of FIG. 1a in a second state.
FIG. 2a is a plan view of the screen apparatus of FIGS. 1a and 1b illustrating one embodiment of a highlighting sequence in accordance with a display method of the present invention.
FIG. 2b is a plan view of the screen apparatus of FIGS. 1a and 1b illustrating another embodiment of a highlighting sequence in accordance with a display method of the present invention.
FIG. 2c is a plan view of the screen apparatus of FIGS. 1a and 1b illustrating yet another embodiment of a highlighting sequence in accordance with a display method of the present invention.
FIG. 2d is a plan view of the screen apparatus of FIGS. 1a and 1b illustrating a further embodiment of a highlighting sequence in accordance with a display method of the present invention.
FIG. 2e is a plan view of the screen apparatus of FIGS. 1a and 1b illustrating a further embodiment of a highlighting sequence in accordance with a display method of the present invention.
FIG. 2f is a plan view of the screen apparatus of FIGS. 1a and 1b illustrating still another embodiment of a highlighting sequence in accordance with a display method of the present invention.
FIG. 3 a is a schematic plan view of the electronic map arrangement of FIGS. 1a and 1b in a first state.
FIG. 3b is a schematic plan view of the electronic map arrangement of FIGS. 1a and 1b in a second state, illustrating one embodiment of a clustering method of the present invention.
FIG. 4a is a plan view of the screen apparatus of FIGS. 1a and 1b in a first state of the present invention.
FIG. 4b is a plan view of the screen apparatus of FIGS. 1a and 1b in a second state illustrating one embodiment of a callout method of the present invention.
FIG. 5 is a flow chart illustrating a method of the present invention for displaying map information.
FIG. 6 is a flow chart illustrating another method of the present invention for displaying map information.

Corresponding reference characters indicate corresponding parts throughout the several views. Although the exemplification set out herein illustrates embodiments of the invention, in several forms, the embodiments disclosed below are not intended to be exhaustive or to be construed as limiting the scope of the invention to the precise forms disclosed.

### DESCRIPTION OF THE PRESENT INVENTION

The present invention may be described herein in terms of algorithms and operations on computer-generated displays. It has proven convenient, primarily for reasons of common usage among those skilled in the art, to describe the invention in terms of algorithms and operations on displays on a computer screen. It is to be understood, however, that these and similar terms are to be associated with appropriate physical elements, and are merely convenient labels applied to these physical elements. Unless otherwise stated herein, or apparent from the description, terms such as "calculating", "determining", "processing", "presenting" or "computing", or similar terms, refer the actions of a computing device that may perform these actions automatically, i.e., without human intervention, after being programmed to do so.

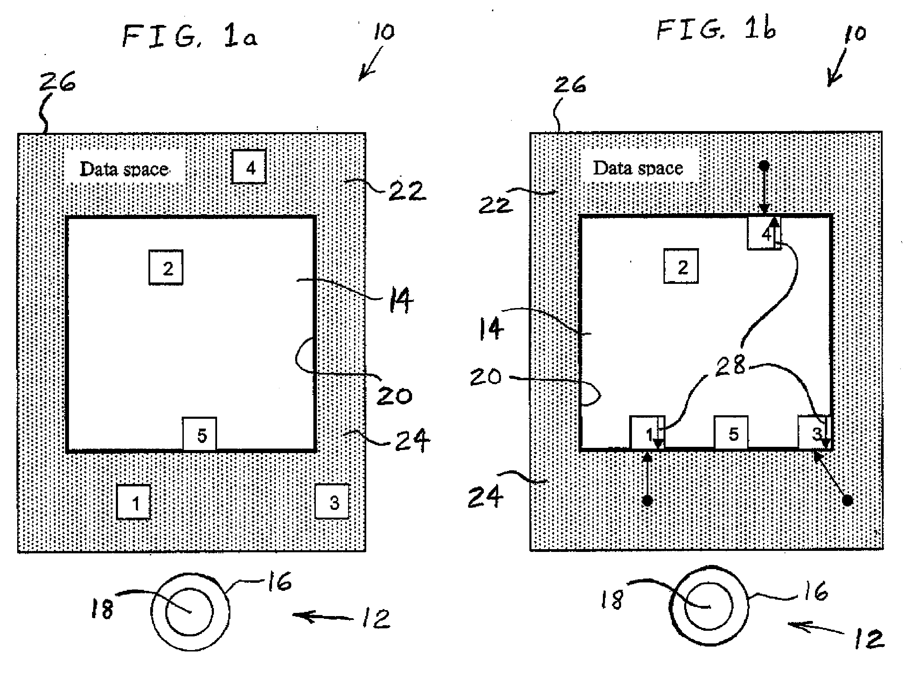

Referring now to the drawings, and particularly to FIGS. 1a and 1b, there is shown one embodiment of a map arrangement 10 of the present invention including a user interface 12 and a screen apparatus 14. User interface 12 may include a one-dimensional control device such as a dial or knob 16. Dial 16 may be one-dimensional in the sense that it allows a user to go only backward and forward through a list or spectrum of electronic entities that may be individually selected. An example of a one-dimensional control device is a tuning knob on a radio that enables a user to select a desired radio frequency to which the radio is to be tuned. User interface 12 also includes a pushbutton 18 that may be actuated in a direction into the page of FIGS. 1a and 1b. Pushbutton 18 may be used by a user to select an electronic entity that has been "highlighted" by use of dial 16, as described in more detail below.

Screen apparatus 14 may include an electronic computer screen or monitor, for example. In one embodiment, the screen or monitor may be mounted on a dashboard of a vehicle, such as an automobile. Screen apparatus 14 may include a processor and memory for controlling the information or content that is displayed on the screen or monitor.

Screen apparatus 14 may display a section, defined by a rectangular boundary 20, of a two-dimensional electronic map or "data space" 22. Another section 24 of map 22, disposed between boundary 20 and an outer rectangular boundary 26 of map 22, is not displayed by screen apparatus 14. In the specific embodiment illustrated in FIG. 1a, there are five points of interest 1-5 included within map 22. Points of interest 2 and 5 lie within boundary 20 of screen apparatus 14 and are thus displayed thereby, and points of interest 1, 3 and 4 lie outside boundary 20 of screen apparatus 14 and are thus not displayed thereby. Points of interest 1-5 may be restaurants, hotels, or other sites that a user would like to locate on a geographical map in the form of electronic map 22. User interface 12 may include additional controls (not shown) for adjusting the zoom level and scroll in order to change the section of map 22 that is displayed on screen apparatus 14.

According to the invention, indications of all off-screen items, such as points of interest 1, 3 and 4, may be provided on screen apparatus 14, i.e., within boundaries 20, as shown in FIG. 1b. The indications may indicate information about the off-screen locations of the off-screen items, such as points of interest 1, 3 and 4. In one embodiment, the invention ensures that indications of all available data items (e.g., points of interest), or a useful subset of the data items, are displayed on the screen, even in situations where the chosen zoom level and scroll settings prevent the display of the complete set of items on the screen. Indications of off-screen items, i.e., items with positions that are currently not visible on the screen, are moved into the screen, as shown in FIG. 1b. These indications off-screen items may be placed along the perimeter of the screen, i.e., immediately adjacent to boundary 20. The particular side of the screen, i.e., the particular one of the four linear segments of boundary 20, on which the indication is placed, and the placement of the indication along that side, may be chosen such that the indication is as close as possible to the corresponding item's actual position outside the screen, as illustrated in FIGS. 1a and 1b. In order to differentiate indications of off-screen items from items that have their actual locations along the perimeter of the screen, graphical markings, such as arrows 28, may be provided in the indications. These arrows 28 identify the indications as being indications and also provide directional information as to the actual locations of the corresponding off-screen items.

Dial 16 may be used for highlighting individual ones of points of interest 1-5 (or indications thereof) and pushbutton 18 may be actuated for selecting a highlighted item. Because all selectable items are visible on the screen, a user can immediately see what items are available and selectable without the need for scrolling and zooming. The process of selection may be a two step process, including a highlighting step and a selection step. As used herein, "highlighting" may mean that an item is marked as an "in focus" item or an item that may be currently selected. Selection is a further, additional step that may be taken on an already highlighted, or current item. Highlighting may be performed with a one-dimensional input device, such as dial 16, that provides "next" and "previous" input. Dial 16 may be used to shift highlighting from a currently highlighted item to either a previously highlighted item or a next item in a particular predetermined sequence or relative ordering. In addition to knobs, dials and sliding levers, a one-dimensional input device can be in the form of keys or voice input, for example. Because the user has only two input choices, i.e., forward through the sequence, or reverse through the sequence, the level of attention required of the user to operate the input is low.

The present invention provides a method for efficient selection of items with only a one-dimensional input device, such as dial 16, and a select key, such as pushbutton 18. This simple and efficient user interface may be especially beneficial in situations where the user's attention is shared with other tasks, such as driving a car. Another benefit is the ease of use of the user interface.

The limited number of input possibilities (i.e., forward and backward) could lead to an excessive number of input steps when large numbers of items are selectable. For example, it may be necessary to use dial 16 to scroll through a large number of items, such as points of interest or indications thereof, before a desired item is arrived at. This problem may be exacerbated if the user does not know, and does not have any way of determining, where in the sequence the desired item is located. That is, as dial 16 is rotated, the user may need to read each item that is newly highlighted in order to determine whether the newly highlighted item is the item that the user desires. This is a slow process that may require a high level of user attention. The present invention provides a solution for this problem as described below.

The present invention provides techniques for highlighting and selecting items based on the items being ordered in a sequence that may be intuitive to the user. Thus, the user may know the position of a desired item in the sequence relative to a currently highlighted item, and may quickly scroll to the desired item from the currently highlighted item without having to read each item that is highlighted along the way.

The present invention may also provide a method for grouping items and/or indications of items into a single cluster. Such clustering may reduce the on-screen clutter that may be caused by the presence of too many on-screen items or indications of off-screen items.

The present invention may further provide a method for using callouts to avoid on-screen overlap of items and/or indications of items. The use of callouts may enable more exact location information associated with the items and/or indications to be conveyed to the user.

The present invention may still further provide for methods of automatic zooming and scrolling to items, including to indications of off-screen items. Thus, more exact location information associated with the indications of off-screen items may be provided to the user with a reduced number of steps being required of the user.

Techniques for highlighting and selecting items may be based on novel ordering schemes of the present invention for placing the items and indications in a particular sequence. The ordering may include assigning a unique identifying number to each item and indication. This number is used to determine which item or indication is next highlighted, i.e., is "next on the list," as the user scrolls, either forward or backward, through the sequence of items and indications. As the scrolling reaches an end of the sequence, e.g., point of interest 5 in a forward direction, the scrolling may loop around to continue the scrolling at item 1. Similarly, if point of interest 1 is reached while scrolling in a reverse direction, the scrolling may loop around to continue the reverse scrolling at item 5. Thus, the sequences may be recurring in either of the forward and reverse directions.

In one embodiment of a method of the present invention for ordering items and indications in a particular predetermined sequence, numbers are arbitrarily assigned to each item and indication on a random basis. This is the case in the embodiment of FIGS. 1a and 1b wherein numbers 1-5 are arbitrarily assigned to the five points of interest. The numbers assigned to each item and to each indication determine the order or sequence in which the items and indications are highlighted during the scrolling process. The assigned numbers may be superimposed on the items and indications such that the sequence in which the items and indications are highlighted is evident to, or ascertainable by, the user. Thus, the user may see at a glance which item or indication would be the previous or next one to be highlighted. The user may also be able to see how far away along the sequence a desired item or indication is in both the forward and reverse scrolling directions. Based on these perceived distances, the user may decide whether to use dial 16 to scroll forward or backward to arrive at the desired item or indication most quickly.

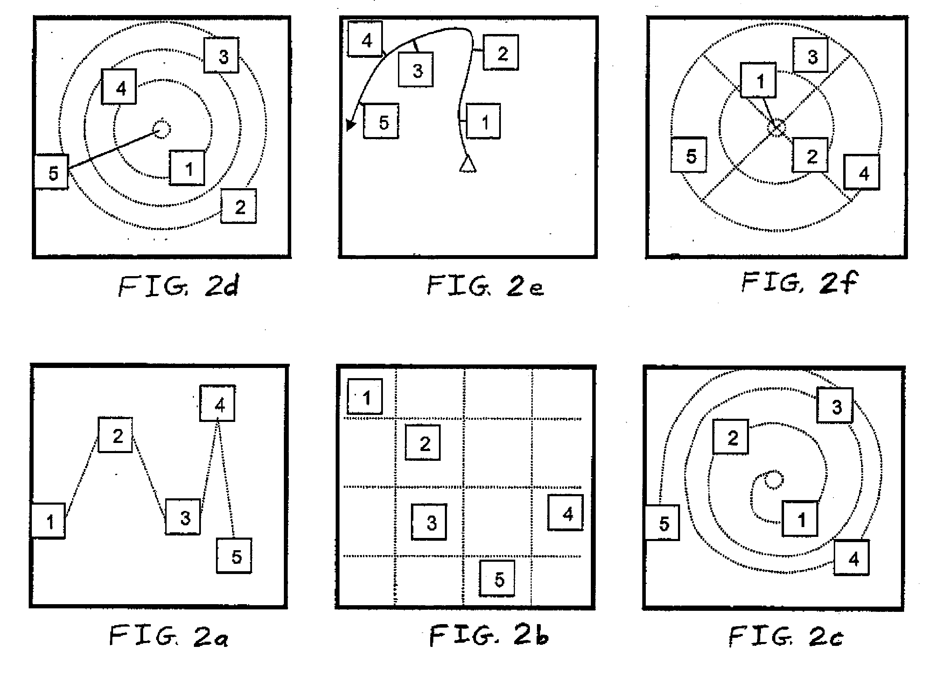

Various other methods of the present invention for ordering items and indications in a particular predetermined sequence are illustrated in FIGS. 2a-f. These methods have the same advantages as the arbitrary method of FIGS. 1a and 1b as well as additional advantages as described below.

In the embodiment of FIG. 2a, items and indications are ordered along a particular axis or line. For example, the location of the item or indication along the x-axis or the y-axis is used to determine the next or previous items to be highlighted in the sequence. In the specific embodiment illustrated in FIG. 2a, items and indications are numbered according to the position of the item or indication along the x-axis. Other lines besides the coordinate axes could be used. For example, items and indications could be numbered according to their positions along a line extending from the top left hand corner to the bottom right hand corner of the screen.

In the embodiment of FIG. 2b, items and indications are ordered according to their locations in cells of a matrix. This matrix ordering groups the items and indications into a matrix and highlights items and indications according to some ordering of cells in that matrix. For example, in the specific embodiment of FIG. 2b, the items and indications are ordered according to row and then according to column. That is, an item or indication in the top left cell may be assigned number 1, i.e., may be highlighted first, followed by any items and indications in each successive cell to the right. The cells from left to right in each succeeding row follow in order. If there are multiple items and/or indications within a cell, these items and indications may be sequenced according to a linear ordering that is compatible with the cell ordering. Alternatively, multiple items and/or indications within a cell may be ordered arbitrarily.

In the embodiment of FIG. 2c, items and indications are ordered according to their positions along a spiral, i.e., a curve generated by a point moving around a fixed reference point while constantly receding from or approaching it. In one embodiment, the reference point represents the user's location in the data space. The tightness of the spiral may be adjusted to be a best fit according to the layout or positioning of the items and/or indications within the electronic map data space, or according to the preferences of the user. Optionally, the spiral connects each item and indication, and an image of the spiral is displayed on-screen.

In the embodiment of FIG. 2d, items and indications are numerically ordered according to the sequence in which they would be passed by a radius that rotates or sweeps around a screen, similarly to a radar sweep. That is, items and indications may be ordered according to their angular positions relative to a reference point such as the user's location in the map data space. Items and indications may be highlighted in a sequence as if a narrow beam or wider arc is swept over them. If items or indications have the same or similar angles relative to a reference point such that more than one item might be highlighted at a time, the distance between the reference point and the item/indication may determine the sorting order. Optionally, images of the radar range circles and the sweeping arc may be displayed on the screen.

In the embodiment of FIG. 2e, items and indications are ordered according to their positions along a relevant intended path, such as the planned path of an automobile in a driver navigation system. From each item and indication, a line can be drawn to the nearest corresponding point on that path. The numerical order of the items may be determined by the order of the corresponding points from one end of the path to the opposite end of the path, such as from the start to the finish of the path.

In the embodiment of FIG. 2f, items and indications are grouped according to sectors that span both discrete radial distances from a reference point as well as angular positions relative to the reference point. Items and indications may be highlighted primarily in the order of their sector's radial distance from the reference point, and secondarily in the order in which the items and indications would be passed by a radar-type sweep that rotates around the screen, wherein each sweep is confined to the current group of radially equidistant sectors. That is, once the radially closest sectors have been swept through, the radar beam lengthens to sweep through the next nearest set of sectors, and this process continues until all of the sectors have been visited. In the embodiments of FIGS. 2c and 2f, and possibly in the embodiment of FIG. 2e, the particular sequence is in an order of distance between the user and the points of interest.

In all of the above embodiments, highlighting may be performed according to the numbers assigned by the ordering. The assigned number may be displayed on the icon representing the item or indication. This visual numbering may enable the user to easily recognize which item will be next highlighted in the forward and reverse scrolling directions.

In any of the embodiments of FIGS. 2a-f, the particular sequence may depend upon locations of the points of interest relative to a location of the user, which may be centered on the screen. If the user moves, the screen may be recentered. Thus, the particular sequence may also vary with movement of the user.

Highlighting and selection may be performed on individual on-screen and off-screen items and location-adjusted indications. Highlighting and selection may also be performed on clusters of items and indications, as described below. When an item or indication is highlighted, additional information about the highlighted item or indication may be displayed on the screen. This additional contextual information may make it easier for the user to decide whether he wants to select the highlighted item or indication.

If there are too many on-screen and off-screen items available, it may cause visual clutter and/or cause the use of a one-dimensional device for highlighting to be a long and cumbersome process. For these reasons, it may be desirable to limit the number of items that are displayed on the screen.

According to one embodiment of the present invention, clustering techniques may be used to reduce the number of items and indications that are displayed on the screen. By the technique of clustering, multiple items and/or indications may be merged into a single icon indication which represents the multiple items and/or indications. Various clustering strategies may be employed to determine which items and indications should be merged together. In one embodiment, clustering may automatically take place if a threshold number is exceeded by a number of inlying points of interest having map locations lying inside of the displayed section, a number of outlying points of interest having map locations lying outside of the displayed section, and/or a sum of the number of inlying points of interest and the number of outlying points of interest.

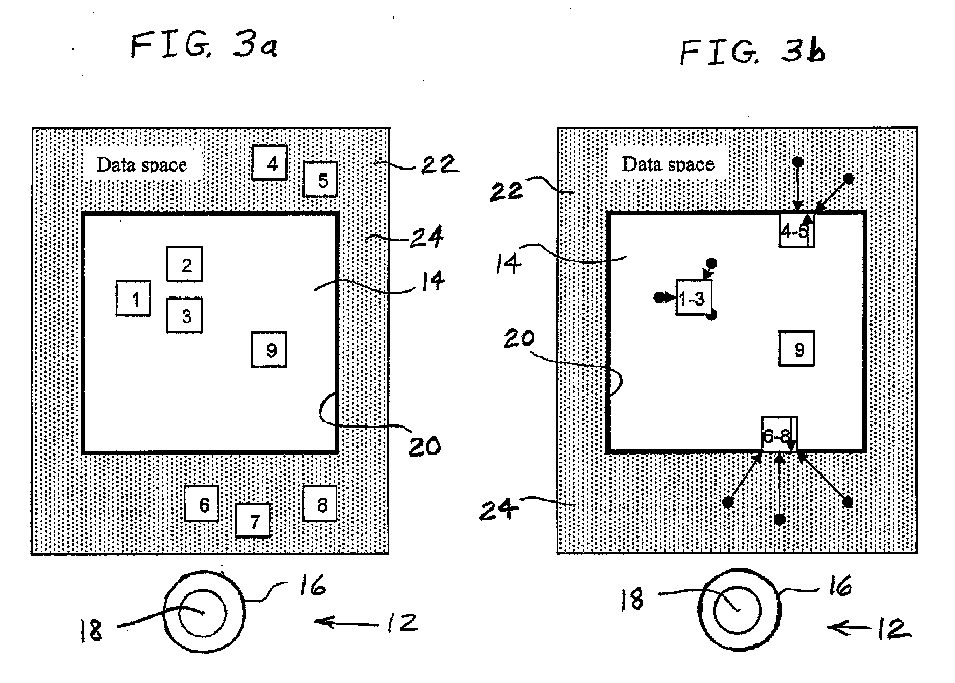

In one embodiment of a clustering strategy of the present invention which is illustrated in FIGS. 3a and 3b, items and/or indications that are near each other on the screen may be merged together. Specifically, in FIG. 3a, points of interest 1, 2 and 3 are close enough together that they may be merged into a single indication labeled "1-3" in FIG. 3b. Further, points of interest 4 and 5 are close enough together in undisplayed section 24 that they may be merged into a single indication labeled "4-5" in FIG. 3b. Similarly, points of interest 6, 7 and 8 are close enough together in undisplayed section 24 that they may be merged into a single indication labeled "6-8" in FIG. 3b.

In one embodiment, clustered indication 4-5 and clustered indication 6-8 are disposed at locations within the displayed section of map 22 that are closest to the off-screen location of one of the points of interest that were merged into the clustered indication. Specifically, clustered indication 4-5 may be disposed at a location closest to point of interest 4; and clustered indication 6-8 may be disposed at a location closest to point of interest 7.
Clustered indication 1-3 may be disposed at a location that minimizes a sum of the respective distances between cluster indication 1-3 and each of the three points of interest 1, 2 and 3 individually. In another embodiment, clustered indication 4-5 may be disposed at a location that minimizes a sum of the respective distances between cluster indication 4-5 and each of the two points of interest 4 and 5 individually. Similarly, clustered indication 6-8 may be disposed at a location that minimizes a sum of the respective distances between cluster indication 6-8 and each of the three points of interest 6, 7 and 8 individually.

In yet another embodiment, clustered indication 4-5 is disposed somewhere between its location illustrated in FIG. 3b and the location that minimizes a sum of the respective distances between cluster indication 4-5 and each of the three points of interest 4 and 5 individually. Similarly, clustered indication 6-8 is disposed somewhere between its location illustrated in FIG. 3b and the location that minimizes a sum of the respective distances between cluster indication 6-8 and each of the three points of interest 6, 7 and 8 individually.

In one embodiment, items and/or indications that are close to each other may be clustered together, but only if they are of the same type. For example, on-screen items may only be clustered with on-screen items; indications of off-screen items may only be clustered with indications of off-screen items; restaurants may only be clustered with restaurants; and/or retail establishments may only be clustered with retail establishments.

Clusters may be highlighted in the same way as items/indications that are not clustered, such as by use of dial 16. In one embodiment, the ordering sequence of clusters is according to the lowest or highest number assigned to any of the items/indications included in the cluster. In another embodiment, the clusters are reordered amongst themselves according to the same ordering algorithms described above for application to normal items/indications.

Upon selection of a cluster, such by actuation of pushbutton 18, the cluster may be broken up into the former state of individual items/indications, thereby enabling the user to highlight each item/indication in turn. If this breakup of a cluster results in too many items/indications being displayed on the screen, other items/indications that were not part of the broken up cluster may be merged together in another cluster. A smooth animation could be displayed on screen apparatus 14 to show the clustering and unclustering of items/indications.

An extension of the clustering approach is to merge a group of clusters into further clusters. If the clustering of items/indications yields too many clusters, then these first-level clusters and additional items/indications may be grouped into another second-level cluster or clusters. This approach of merging clusters into further clusters can be repeated until a suitable number of clusters are displayed. Upon being selected, a cluster may be broken up into sub-clusters and the extra items/indications again. In one embodiment, merging of first-level clusters into second-level clusters takes place if there exists a number of first-level clusters exceeds a threshold number.

In one embodiment, the clustering of clusters is a continuous function rather than a discrete hierarchical function. For example, sub-clusters may shift from one cluster to another cluster as conditions warrant in order to reduce clutter on the display screen.

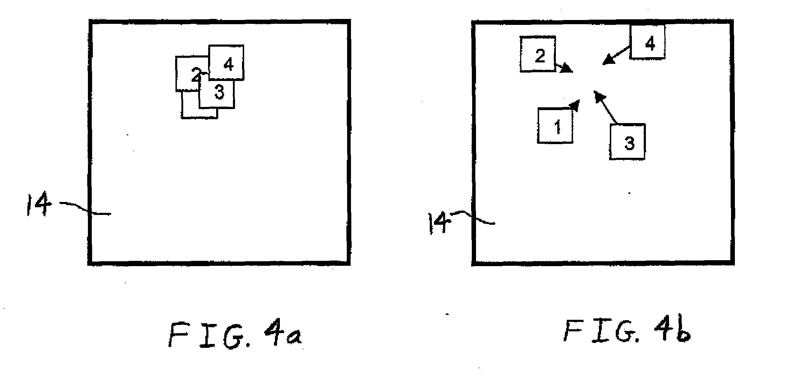

When items/indications overlap, as illustrated in FIG. 4a, an extension of the concepts of the present invention is the use of call outs and item/indication reordering. When items/indications, or their representations, are completely or partially overlapping with each other, they may be slightly shifted or displaced from their original overlapping positions until they no longer overlap, as illustrated in FIG. 4b. A pointer, such as an arrow, may be used to indicate the item/indication's original position. A smooth animation may be displayed on screen apparatus 14 in order to illustrate the displacement of items. Callouts may also be used in combination with clusters, such as to break up overlapping clusters. If items/indications overlap after breaking up a cluster, call outs may be used to eliminate the overlap.

In order to reduce the number of steps that are taken by a user in order to focus on a particular item/indication, the present invention may employ automatic zooming and automatic scrolling to items/indications. For example, the user might want to see the original location of an on-screen indication of an off-screen item. An extension to the present invention includes providing automatic zooming and scrolling. For example, when an on-screen or off-screen item/indication is highlighted or selected, the screen view may be zoomed and scrolled to make the item/indication appear in a favorable position, such as at the center of the screen. Thus, it is not necessary for the user to manually move an item/indication into view, and the number of user interaction steps is reduced.

Two examples of zooming and scrolling in order to achieve favorable positioning of items/indications will now be described. In a first example, the view is zoomed and scrolled such that a reference point, such as the current position of the user, remains in the same relative position within the display screen. In this first example, the effect may be that the view is zoomed around the reference point until the highlighted/selected item/indication is readily and clearly visible on the screen. In a second example, the view may be zoomed and scrolled such that the highlighted/selected item/indication is in a prominent position on the screen, e.g., centered on the screen, without regard to preserving the relative positioning of the reference point.

When automatic zooming and scrolling to highlighted/selected items/indications is performed without regard to preserving the reference point's relative positioning, an icon representing that reference point may be displayed in a different relative location on the screen, or the reference point may be no longer visible within the screen. If the reference point is off-screen, an icon representing that reference point may be included within the screen display, possibly at a screen location closest to the reference point's actual location on the map. An arrow, similar to arrows 28 in FIG. 1b, may be included within the icon to indicate the direction of the reference point's actual location relative to the icon representing the reference point. In one embodiment, the user may select this icon, and then special operations of zooming and panning are performed. For example, the reference point may be automatically returned to a prominent position on the screen. As another example, manual panning and zooming may be enabled.

The present invention may also be applied to other input or control devices that have more than a one-dimensional input, i.e., at least a two-dimensional input. When using voice input, the numbers on items can be spoken to indicate highlighting and selection. When icons are displayed on the screen using the methods mentioned above, they can also be selected with a mouse, touch screen or similar input device that has two or more input dimensions.

As an example of use of the present invention, assume that a digital map shows the location of points of interest in the form of restaurants. Also assume that the on-screen section of the map shows the downtown area of a city, but that not all restaurants are located in the downtown area. Indications of all the restaurants outside of the downtown area are placed along the boundary of the screen, at positions that depend upon the direction of the restaurants' locations from downtown. For example, a restaurant that is several miles to the north from downtown may have its indication placed in the middle of the upper side of the screen. Another restaurant that is five miles to the southwest from downtown may have its indication placed in the lower left corner of the screen.

As another example of use of the present invention, assume that the user selects the restaurant from the first example that is off-screen because it is five miles southwest of downtown. The user may use a dial controller, such as dial 16, for input. By turning the dial clockwise or counterclockwise, the user may cycle through all the available restaurants, highlighting one at a time. When the user highlights the desired restaurant, he may actuate the "select" key, such as pushbutton 18, to indicate that the highlighted restaurant is his selection. With automatic scrolling and zooming, the displayed section of the map may be re-centered on the selected restaurant. After the re-centering on the selected restaurant, the restaurants in the downtown area may no longer be on the screen because they are about five miles away from the selected restaurant in the northeast direction. Icon indications of the downtown restaurants may be placed in the top right, i.e., northeast, corner of the screen. Because the downtown restaurants may overlap on each other in that top right corner, the callout and reordering technique may be used to eliminate or reduce the overlapping and place the indications side-by-side or top-to-bottom. The side-by-side or top-to-bottom arranged indications may be kept close to the top right corner. Visual indicators on the icon indications, such as arrows, may be updated, e.g., reoriented, to show in which directions the restaurants can be found. The visual indicators may help the user to determine each restaurant's actual position, even if the restaurant's icon indication is displaced from the place on the screen that is closest to the restaurant's location. That is, due to the callout and reordering, the restaurant's icon indication may be displaced a large distance on the screen from the top right corner, such as to the middle of the right side of the screen. However, the visual indicator of the direction, e.g., an arrow within the icon, may have its orientation adjusted according to the displacement of the icon indicator on the screen such that the visual indicator continues to indicate a correct direction from the icon indication to the restaurant's off-screen location.

As yet another example of use of the present invention, assume that there are forty items/indications in the form of icons (both on-screen and off-screen) representing restaurants to be displayed on the screen. With forty icons, a selection technique based on highlighting the next or previous item may be cumbersome and time-consuming, and thus the forty restaurants may be grouped into clusters. Two clusters may be formed, with a first cluster representing all the restaurants in the northern part of the city, and a second cluster representing the southern part of the city. Ten remaining restaurants in downtown may not be clustered as they are visible in the on-screen part of the map. Assuming the user is interested in restaurants in the northern part of the city, he may highlight the appropriate northern cluster icon on the screen by using a dial input, such as dial 16, which can be turned clockwise or counterclockwise. Upon highlighting the northern cluster icon, the map may be automatically zoomed and scrolled to show a northern area that encompasses all restaurants within the cluster. The user then presses the select key, such as pushbutton 18. This selecting step may cause the northern cluster to be broken apart into individual restaurant items. To handle the corresponding increase in the number of icons available for display on the screen, the system may automatically group all of the restaurants in the downtown area into a new cluster.

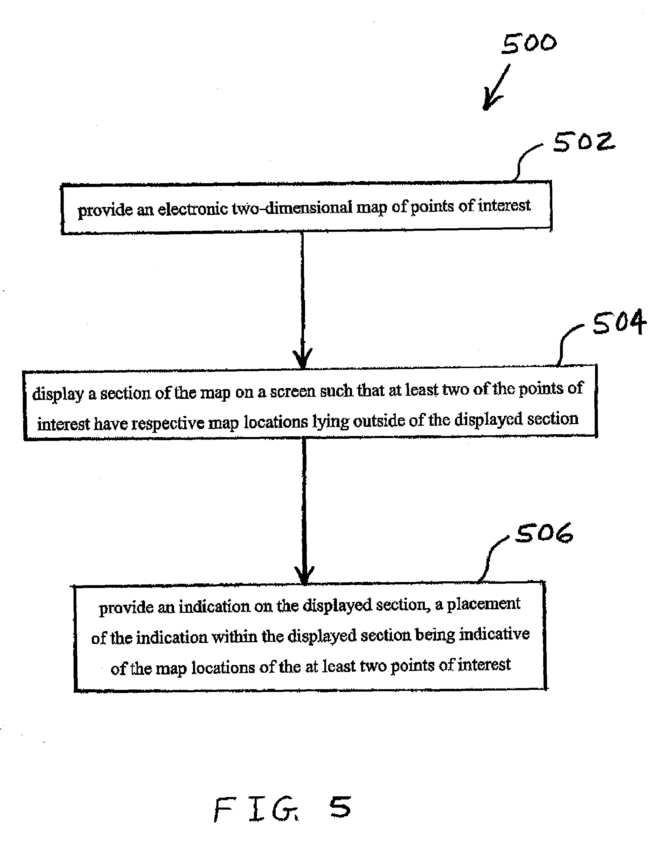

An embodiment of a method 500 of the present invention for displaying map information is illustrated in FIG. 5. In a first step 502, an electronic two-dimensional map of points of interest is provided. For example, in the embodiment of FIG. 3b, an electronic two-dimensional map 22 of points of interest 1-9 is provided.

In a next step 504, a section of the map is displayed on a screen such that at least two of the points of interest have map locations lying outside of the displayed section. In FIG. 3b, a section of map 22 within boundary 20 is displayed on screen apparatus 14 such that points of interest 4-5 and 6-8 have map locations lying outside the displayed section of map 22.

In a final step 506, an indication on the displayed section is provided, a placement of the indication within the displayed section being indicative of the map locations of the at least two points of interest. For example, a cluster indication 4-5 is provided. A placement of cluster indication 4-5 along and inside an upper segment of boundary 20 of the displayed section is indicative of the map locations of points of interest 4 and 5 being closest to the upper segment of boundary 20.

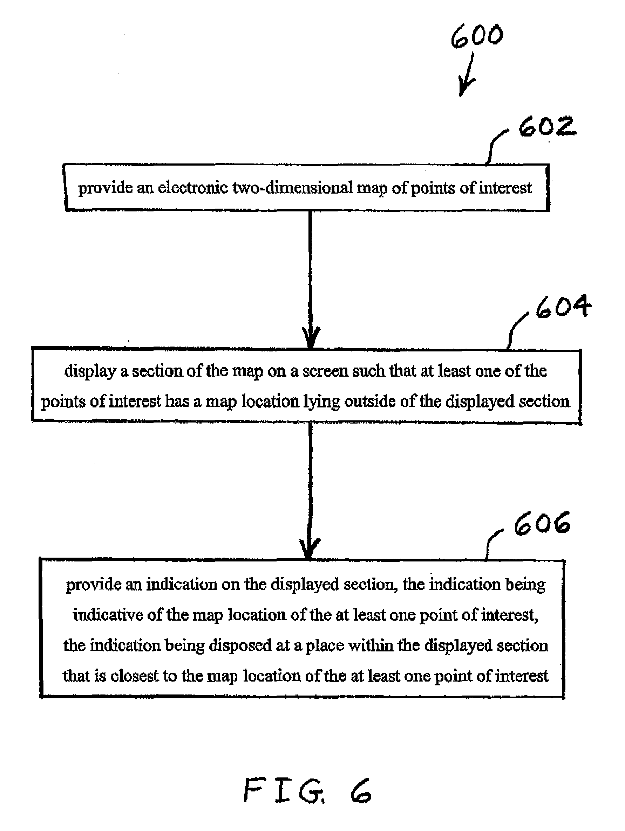

Another embodiment of a method 600 of the present invention for displaying map information is illustrated in FIG. 6. In a first step 602, an electronic two-dimensional map of points of interest is provided. For example, in the embodiment of FIG. 1b, an electronic two-dimensional map 22 of points of interest 1-5 is provided.

In a next step 604, a section of the map is displayed on a screen such that at least one of the points of interest has a map location lying outside of the displayed section. In FIG. 1b, a section of map 22 within boundary 20 is displayed on screen apparatus 14 such that points of interest 1, 3 and 4 have map locations lying outside the displayed section of map 22.

In a final step 606, an indication on the displayed section is provided, the indication being indicative of the map location of the at least one point of interest, the indication being disposed at a place within the displayed section that is closest to the map location of the at least one point of interest. That is, indications 1, 3 and 4 are provided along and inside boundary 20 of the displayed section. The indications are indicative of the map locations of the corresponding points of interest. For example, the indications are positioned along the segment of boundary 20 that is closest to the map locations of the corresponding points of interest. Also the indications include arrows 28 that point to the map locations of the corresponding points of interest. Further, the indications are disposed at places within the displayed section, and along boundary 20, that are closest to the map locations of the points of interest 1, 3 and 4.

The present invention has been described herein as being applied to the selection of points of interests, such as restaurants, in an electronic map of a navigation system. However, it is to be understood that the present invention may be applied to any system that involves display and selection of data items in a spatial manner.

The present invention has also been described herein as being applied to a two-dimensional map system for simplicity of illustration. However, it may be readily appreciated that the present application is also applicable to three-dimensional systems.

While this invention has been described as having an exemplary design, the present invention may be further modified within the spirit and scope of this disclosure. This application is therefore intended to cover any variations, uses, or adaptations of the invention using its general principles.

## Claims

1. A method of displaying map information, comprising the steps of:
providing an electronic two-dimensional map of points of interest;
displaying a section of the map on a screen such that at least one of the points of interest has a map location lying outside of the displayed section; and
providing an indication on the displayed section, the indication being indicative of the map location of the at least one point of interest, the indication being disposed at a place within the displayed section that is closest to the map location of the at least one point of interest.

2. The method of Claim 1 comprising the further steps of:
providing an electronic highlighting device;
using the highlighting device to scroll sequentially through the points of interest; providing an electronic selecting device;
using the selecting device to select a highlighted one of the points of interest; and
presenting to a user additional information about the selected point of interest.

3. The method of Claim 1 wherein at least two of the points of interest lie outside of the displayed section, the step of providing an indication comprising providing a clustered indication on the displayed section, the clustered indication being indicative of the map locations of at least two of the points of interest lying outside of the displayed section.

4. The method of Claim 1 wherein the indication comprises an outlying indication, the method comprising the further step of providing at least one inlying indication on the displayed section, the inlying indication being indicative of the map location of at least one point of interest wherein the map location lies inside of the displayed section.

5. The method of Claim 1 comprising the further steps of:
determining that a threshold number is exceeded by at least one of:
a number of inlying ones of the points of interest, the inlying points of interest having map locations lying inside of the displayed section;
a number of outlying ones of the points of interest, the outlying points of interest having map locations lying outside of the displayed section; and
a sum of the number of inlying points of interest and the number of outlying points of interest; and
providing, in response to the determining step, a clustered indication on the displayed section, the clustered indication being indicative of the map locations of at least two of the points of interest.

6. The method of Claim 5 wherein the threshold number comprises a first threshold number, the step of providing a clustered indication comprising providing a plurality of first-level clustered indications on the displayed section, each first-level clustered indication being indicative of the map locations of a respective subset of the points of interest, the method comprising the further steps of:
determining that a second threshold number is exceeded by a number of the first-level clustered indications; and
providing, in response to the step of determining that the second threshold number is exceeded, a second-level clustered indication on the displayed section, the second-level clustered indication being indicative of the map locations of at least two of the first-level clustered indications.

7. An electronic map arrangement, comprising:
a screen apparatus configured to display at least a section of an electronic two-dimensional map of points of interest;
a user controlled electronic highlighting device configured to:
selectively highlight on the screen apparatus a single one of the points of interest at a time; and
highlight on the screen the points of interest in a particular sequence; and
a user controlled electronic selecting device configured to select a currently highlighted point of interest to thereby cause additional information about the selected point of interest to be provided to the user.

8. The arrangement of Claim 7 wherein the highlighting device and the selecting device are manually controlled, the selecting device having at least two input dimensions.

9. The arrangement of Claim 7 wherein the highlighting device is configured to highlight the points of interest in a first particular recurring sequence in a first direction and in a second particular recurring sequence in a second direction.

10. The arrangement of Claim 7 wherein the screen apparatus is configured to:
display a section of the map such that at least one of the points of interest has a map location lying outside of the displayed section; and
provide an indication on the displayed section, the indication being indicative of the map location of the one point of interest, the indication being disposed at a location within the displayed section that is closest to the map location of the one point of interest.

11. The arrangement of Claim 7 wherein the particular sequence is dependent upon locations of the points of interest relative to a location of the user.

12. The arrangement of Claim 11 wherein the sequence varies with movement of the user.

13. The arrangement of Claim 7, wherein the particular sequence is in an order of distance between the user and the points of interest.

14. The arrangement of Claim 7, wherein the particular sequence is in an order in which the user is scheduled to pass by the points of interest according to an intended path of the user.

15. The arrangement of Claim 7, wherein the particular sequence is in an order in which the points of interest are crossed by a sweep across the screen.

16. A method of displaying map information, comprising the steps of:
providing an electronic two-dimensional map of points of interest;
displaying a section of the map on a screen such that at least two of the points of interest have respective map locations lying outside of the displayed section; and
providing an indication on the displayed section, a placement of the indication within the displayed section being indicative of the map locations of the at least two points of interest.

17. The method of Claim 16 wherein the indication is disposed at a place within the displayed section that is at least one of:
a first place that is closest to the map location of at least one of the at least two points of interest;
a second place that minimizes a sum of respective distances between the indication and each of the at least two points of interest; and
a third place that is disposed between the first place and the second place.

18. The method of Claim 16 comprising the further step of selecting the indication to thereby call out individual indications of the points of interest that have map locations lying outside of the displayed section.

19. The method of Claim 16 wherein the displayed section of the map comprises a first section, the method comprising the further steps of:
terminating the displaying of the first section of the map; and
displaying a second section of the map on the screen, the second section being centered on the points of interest that have map locations lying outside of the first section.

20. The method of Claim 19 wherein a current location of the user lies within the second section of the map.
